# EUROPEAN PATENT SPECIFICATION

(11) **EP 3 741 665 B1**
(45) Date of publication and mention of the grant of the patent: **24.12.2025**
(21) Application number: 20175764.8
(22) Date of filing: 20.05.2020
(51) Int. Cl.: B64C 11/30, B64D 31/06, F02K 1/76

(54) **METHOD AND SYSTEM FOR OPERATING AN AIRCRAFT POWERPLANT**
VERFAHREN UND SYSTEM ZUM BETRIEB EINER FLUGZEUGTRIEBWERKSANLAGE
PROCÉDÉ ET SYSTÈME POUR FAIRE FONCTIONNER UN GROUPE MOTOPROPULSEUR D'AÉRONEF

(30) Priority: 21.05.2019 US 201916418133
(43) Date of publication of application: 25.11.2020
(73) Proprietor: Pratt & Whitney Canada Corp., Longueuil, Québec J4G 1A1 (CA)
(72) Inventor: BREGANI, Benjamin, (01BE5) Longueuil, Québec J4G 1A1 (CA); MCCARTHY, Sean, (01BE5) Longueuil, Québec J4G 1A1 (CA)
(74) Representative: Dehns

(56) References cited:
- US-A- 4 958 289
- US-A1- 2010 042 267
- US-A1- 2011 056 183

## Description

### TECHNICAL FIELD

The present disclosure relates generally to aircraft powerplants, and more particularly to operating aircraft powerplants to control reverse thrust.

### BACKGROUND OF THE ART

A pilot may request reverse thrust of an aircraft powerplant at landing. For example, for a propeller driven aircraft, a pilot typically moves a power lever to a maximum reverse thrust position to request reverse thrust of a propeller at landing in order to slow the aircraft. When the power lever is at the maximum reverse thrust position, a predetermined amount of reverse thrust is provided irrespective of the reverse thrust needed to slow the aircraft at landing.

US 4,958,289 A discloses aircraft propeller speed control.

US 2011/056183 A1 discloses an ultra efficient propulsor with an augmentor fan circumscribing a turbofan.

US 2010/042267 A1 discloses a programmable reverse thrust detent system and method.

As such, there is a need for improvement.

### SUMMARY

In accordance with a first aspect of the present invention, there is provided a method for operating an aircraft powerplant as claimed in claim 1.

In an optional embodiment, determining the reverse thrust rating comprises selecting one of a plurality of reverse thrust ratings based on the one or more powerplant or aircraft parameters.

In an optional embodiment, determining the reverse thrust rating comprises adjusting a maximum reverse thrust rating based on the one or more powerplant or aircraft parameters.

In an optional embodiment, the one or more powerplant or aircraft parameters comprise an aircraft speed at landing.

In an optional embodiment, the one or more powerplant or aircraft parameters comprise one or more of an aircraft speed at landing, a runway length, an aircraft weight, a target aircraft speed at completion of reverse thrust, an aircraft wheel speed and a deceleration rate of the aircraft.

In an optional embodiment, the method further comprises determining the reverse thrust rating in response to receiving the request for reverse thrust.

In an optional embodiment, the reverse thrust is requested when a request to enable a mode for automated reverse thrust is received.

In an optional embodiment, controlling reverse thrust comprises modifying, based on the reverse thrust rating, one or more of a propeller speed, a propeller blade angle and an engine torque.

In an optional embodiment, the powerplant comprises an engine comprising or coupled to a variable-pitch bladed propulsor capable of generating forward and reverse thrust and wherein controlling reverse thrust comprises controlling reverse thrust of the bladed propulsor based on the reverse thrust rating when reverse thrust is requested.

In accordance with a second aspect of the present invention, there is provided a system for operating an aircraft powerplant as claimed in claim 8.

In an optional embodiment, determining the reverse thrust rating comprises selecting one of a plurality of reverse thrust ratings based on the one or more powerplant or aircraft parameters.

In an optional embodiment, determining the reverse thrust rating comprises adjusting a maximum reverse thrust rating based on the one or more powerplant or aircraft parameters.

In an optional embodiment, the one or more powerplant or aircraft parameters comprise an aircraft speed at landing.

In an optional embodiment, the one or more powerplant or aircraft parameters comprise one or more of an aircraft speed at landing, a runway length, an aircraft weight, a target aircraft speed at completion of reverse thrust, an aircraft wheel speed and a deceleration rate of the aircraft.

In an optional embodiment, the program instructions are further executable for determining the reverse thrust rating in response to receiving the request for reverse thrust.

In an optional embodiment, the reverse thrust is requested when a request to enable a mode for automated reverse thrust is received.

In an optional embodiment, controlling reverse thrust comprises modifying, based on the reverse thrust rating, one or more of a propeller speed, a propeller blade angle and an engine torque.

In an optional embodiment, the powerplant comprises an engine comprising or coupled to a variable-pitch bladed propulsor capable of generating forward and reverse thrust and wherein controlling reverse thrust comprises controlling reverse thrust of the bladed propulsor based on the reverse thrust rating when reverse thrust is requested.

Any of the above features may be used together, in any combination.

### BRIEF DESCRIPTION OF THE DRAWINGS

Reference is now made to the accompanying figures in which:
Figure 1 is a schematic of an example gas turbine engine and propeller, in accordance with one or more embodiments;
Figure 2 is a schematic diagram illustrating a system for controlling operation of an engine and propeller, in accordance with one or more embodiments;
Figure 3 are power setting schedules illustrating power setting versus power lever angle, in accordance with one or more embodiments;
Figure 4 is a schematic diagram illustrating examples of a propeller controller and an engine controller, in accordance with one or more embodiments;
Figure 5 is a flowchart of a method for controlling operation of an aircraft powerplant, in accordance with one or more embodiments; and
Figure 6 is a block diagram of an example computing device for controlling operation of an aircraft powerplant, in accordance with one or more embodiments.

It will be noted that throughout the appended drawings, like features are identified by like reference numerals.

### DETAILED DESCRIPTION

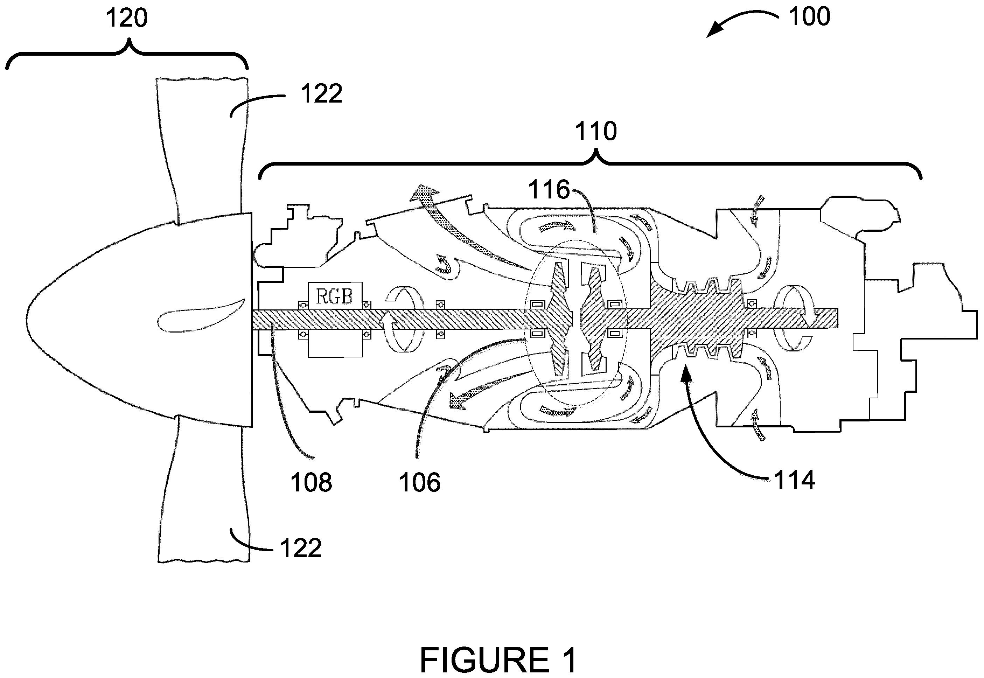

Figure 1 illustrates an aircraft powerplant 100 for an aircraft of a type preferably provided for use in subsonic flight, generally comprising an engine 110 and a propeller 120. The powerplant 100 generally comprises in serial flow communication the propeller 120 attached to a shaft 108 and through which ambient air is propelled, a compressor section 114 for pressurizing the air, a combustor 116 in which the compressed air is mixed with fuel and ignited for generating an annular stream of hot combustion gases, and a turbine section 106 for extracting energy from the combustion gases driving the rotation of the propeller through shaft 108. The propeller 120 converts rotary motion from the shaft 108 of the engine 110 to provide propulsive force for the aircraft, also known as thrust. The propeller 120 is variable-pitch propeller capable of generating forward and reverse thrust. The propeller 120 comprises two or more propeller blades 122. A blade angle of the propeller blades 122 may be adjusted. The blade angle may be referred to as a beta angle, an angle of attack or a blade pitch. The powerplant 100 may be implemented to comprise a single or multi-spool gas turbine engine, where the turbine section 106 is typically connected to the propeller 120 through a reduction gearbox (RGB). It should be understood that while the powerplant 100 comprises a turboprop engine, the methods and systems described herein may be applicable to any other aircraft powerplant comprising any other type of gas turbine engine, such as a turbofan, turboshaft, or any other suitable aircraft engine.

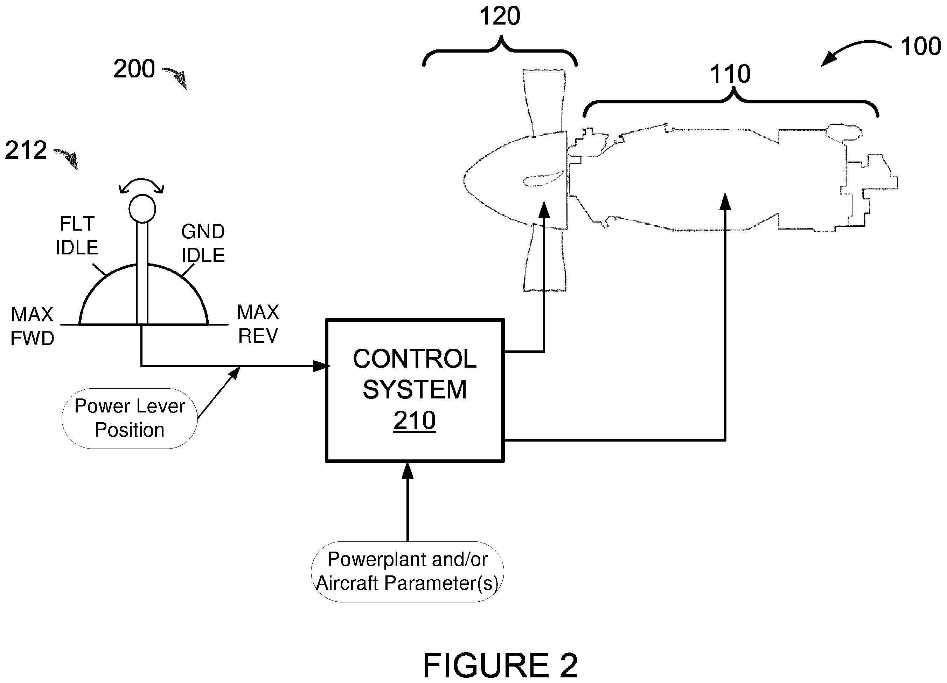

With reference to Figure 2, there is illustrated a system 200 for operating the powerplant 100. In some embodiment, as illustrated, a control system 210 receives a power lever position from a power lever 212 of the aircraft under control by a pilot or other operator of the aircraft. The power lever position is indicative of the type of thrust demanded by the power lever 212. Several power lever positions can be selected, including those for (1) maximum forward thrust (MAX FWD), which is typically used during takeoff; (2) flight idle (FLT IDLE), which may be used in flight during approach or during taxiing on the ground; (3) ground idle (GND IDLE), at which the propeller 120 is spinning, but providing very low thrust; (4) maximum reverse thrust (MAX REV), which is typically used at landing in order to slow the aircraft. Intermediate positions between the abovementioned positions can also be selected. The power lever positions may vary depending on practical implementations of the power lever 212.

The control system 210 receives one or more powerplant and/or aircraft parameters indicative of one or more conditions at landing or during an approach to landing. The powerplant parameter(s) may comprise engine and/or propeller parameter(s) indicative of one or more conditions at landing or during an approach to landing. The condition(s) at landing or during an approach to landing correspond to one or more conditions of the powerplant 100, the engine 110, the propeller 120, the aircraft, conditions external to the aircraft that are relevant to landing and/or any other suitable condition(s). The powerplant and/or aircraft parameter(s) may comprise one or more of an aircraft speed at landing, a runway length, an aircraft weight, a target aircraft speed at completion of reverse thrust, an aircraft wheel speed and a deceleration rate of the aircraft. The powerplant and/or aircraft parameter(s) may vary depending on practical implementations. The control system 210 may receive any other suitable inputs pertaining to the operation and/or control of the propeller 120, engine 110 and/or the aircraft.

In general, the control system 210 is configured to control the engine 110 and the propeller 120 based on the received inputs. The control system 210 is configured to control output power of the engine 110 and rotational speed and blade angle of the propeller 120. The control system 210 may control the engine 110 by adjusting engine fuel flow and/or variable geometries, such as inlet guide vanes or bleed valves. By adjusting the engine fuel flow and/or variable geometries the engine torque, the rotational speed of the shaft 108 and/or any other suitable parameter of the engine 110 may be controlled. The control system 210 may control the propeller 120 by adjusting the propeller blade angle. By adjusting the engine fuel flow to control the output shaft power, adjusting the variable geometries and/or adjusting the propeller blade angle, the propeller speed and/or any other suitable parameter of the propeller 120 may be controlled. For example, control system 210 may control the engine 110 and the propeller 120 to provide reverse thrust when requested by the power lever 212. While the control system 210 is illustrated as separate from the powerplant 100, it should be understood that this is for illustrative purposes only and that the control system 210 may, in some embodiments, be integrated with the powerplant 100.

The control system 210 is configured to determine a reverse thrust rating based on the powerplant and/or aircraft parameter(s) and to control reverse thrust of the propeller 120 based on the reverse thrust rating when reverse thrust is requested.

In some embodiments, the control system 210 determines the reverse thrust rating by selecting one of a plurality of reverse thrust ratings based on the powerplant and/or aircraft parameter(s). Each one of the reverse thrust ratings has a corresponding level of thrust. For example, there may be a regular thrust rating, a medium thrust rating and a low thrust rating. The regular thrust rating may correspond to a maximum reverse thrust rating of the powerplant 100. The maximum reverse thrust rating corresponds to a predetermined upper limit for reverse thrust. Each of the medium and low thrust ratings are set to a percentage of the maximum reverse thrust rating. By way of a specific and non-limiting example, the medium thrust rating may be set to 95% of the maximum reverse thrust rating and the low thrust rating may be set to 90% of the maximum reverse thrust rating. The number of reverse thrust ratings may vary depending on practical implementation, and may be more or less than the three (3) levels exemplified above.

In some embodiments, the control system 210 determines the reverse thrust rating by adjusting the maximum reverse thrust rating based on the powerplant and/or aircraft parameter(s). In some embodiments, the control system 210 determines the reverse thrust rating by reducing the maximum reverse thrust rating based on the powerplant and/or aircraft parameter(s). For example, the maximum reverse thrust rating may be reduced by a percentage as a function of the powerplant and/or aircraft parameter(s) to determine the reverse thrust rating. When the maximum reverse thrust rating is reduced this may be referred to as de-rating of the maximum reverse thrust rating. In some embodiments, the maximum reverse thrust rating is increased based on the powerplant and/or aircraft parameter(s). Any suitable equation, function, calculation, look-up table or the like may be used to determine the maximum reverse thrust rating from the powerplant and/or aircraft parameter(s).

It should be appreciated that engine consumption, engine wear and/or aircraft wear may be reduced by controlling reverse thrust based on the reverse thrust rating as determined herein. Passenger comfort may be improved when the reverse thrust is controlled based on a determined reverse thrust rating having a reduced level of reverse thrust relative to the maximum reverse thrust rating. This is because the lesser the amount of reverse thrust applied at landing, the more comfort the passengers of the aircraft may experience. In some embodiments, the reverse thrust rating is determined and the reverse thrust is controlled without a trigger from a pilot or another aircraft operator. In some embodiments, the functionality of de-rating the maximum reverse thrust rating may be enabled or disabled, for example by a pilot or another aircraft operator. When the functionality of de-rating the maximum reverse thrust rating is disabled, the reverse thrust rating used may correspond to the maximum reverse thrust rating.

To further illustrate controlling of reverse thrust based on the determined reverse thrust rating, a specific and non-limiting example will now be described. When the aircraft is in-flight (e.g., during descent of the aircraft), the pilot sets the power lever 212 to the forward thrust region. As the aircraft approaches the runway, the pilot sets the power lever 212 to the flight idle position. When the aircraft touches down on the ground, the pilot sets the power lever 212 to the maximum reverse thrust position. At landing and/or during the approach to landing the powerplant and/or aircraft parameters are obtained. For the purposes of this example, an aircraft speed is obtained at the time the aircraft has touched down. The reverse thrust rating is determined based on the obtained aircraft speed at landing. In this example, the look-up table illustrated in Table 1 is used to determine the reverse thrust rating. Depending on a range that the aircraft speed falls within, a corresponding reverse thrust rating is selected. For the purposes of this example, if the airspeed is 75 knots, then a reverse thrust rating of 96% is selected. Reverse thrust of the propeller 120 is then controlled based on the reverse thrust rating. When the aircraft speed has been sufficiently reduced, the pilot pushes the power lever 212 towards the ground idle position for the purposes of taxiing to the gate.

**Table 1: Example look-up table for reverse thrust rating**

| **Aircraft Speed Upon Landing (knots)** | **Reverse thrust rating (% of maximum reverse thrust rating)** |
|---|---|
| > 100 | 100 % |
| 90 to 100 | 100 % |
| 80 to 90 | 98 % |
| 70 to 80 | 96 % |
| 60 to 50 | 94 % |
| 40 to 50 | 92 % |
| < 40 | 90 % |

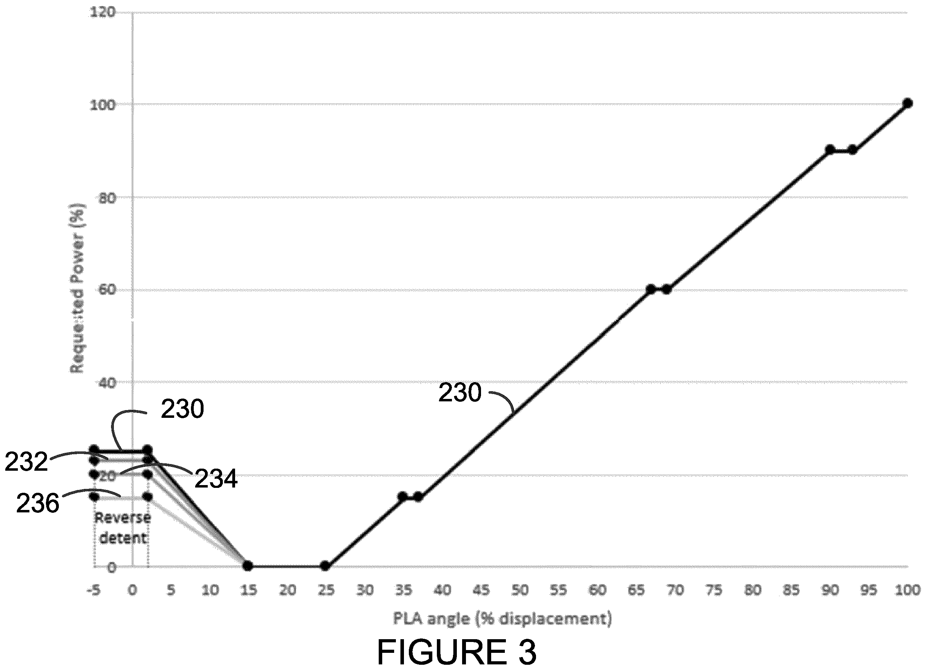

With reference to Figure 3, example power setting schedules for requested engine power versus power lever angle (PLA) are illustrated. A baseline power setting schedule 230 illustrates that the requested power of the engine 110 increases with increasing power lever angle when the power lever 212 has an angle above 25% displacement. Accordingly, positive thrust is provided when the power lever 212 has an angle above 25% displacement and the blade angle of the propeller 120 is at an angle suitable for providing positive thrust. In this example, reverse thrust may be requested by moving the power lever 212 below 15% displacement. Accordingly, reverse thrust is provided when the blade angle of the propeller 120 is at an angle suitable for providing reverse thrust and the power lever 212 is below 15% displacement. In this example, the power lever 212 has a reverse detent (also known as a catch) between 2% and -5% displacement. Typically, the pilot would move the position of the power lever 212 into the reverse detent to request reverse thrust. De-rated power setting schedules 232, 234, 236 respectively illustrate a 2%, 5% and 10% de-rating of the baseline power setting schedule 230 for the region of the power lever for requesting reverse thrust (e.g., between the 15 % and -5% displacement of the power lever angle). In some embodiments, the baseline power setting schedule 230 may be modified based on the determined reverse thrust rating. In some embodiments, one of the power setting schedules 230, 232, 234, 236 may be selected based on the powerplant and/or aircraft parameter(s) and used to accordingly control reverse thrust. The de-rated power setting schedules 232, 234, 236 correspond to the baseline power setting schedule 230 above a given power lever angle (illustrated at 15 % in Figure 3). The power setting schedules may vary depending on practical implementation.

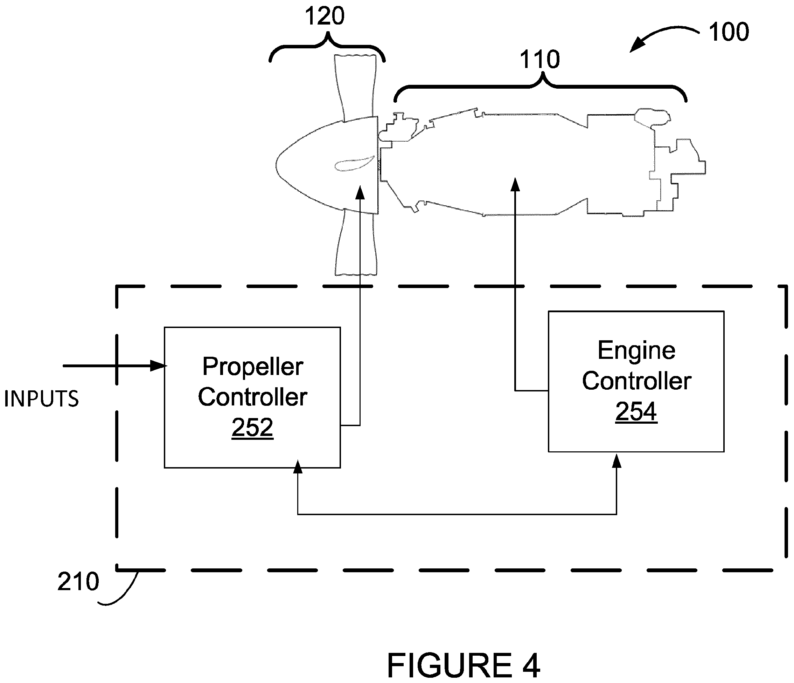

With reference to Figure 4, the control system 210 is illustrated in accordance with one or more embodiments. As illustrated, a propeller controller 252 controls the propeller 120 and an engine controller 254 controls the engine 110. The propeller controller 252 is configured to control the blade angle of the propeller 120. The engine controller 254 is configured to control the engine fuel flow and/or the variable geometries. The propeller controller 252 receives the inputs (e.g., the power lever position, the powerplant and/or aircraft parameter(s) and/or any other suitable inputs) and is in electronic communication with the engine controller for providing one or more of the received inputs to the engine controller 254. In some embodiments, the engine controller 254 additionally or alternatively receives the inputs. In some embodiments, the engine controller 254 provides one or more of the received inputs to the propeller controller 252. The propeller controller 252 and/or the engine controller 242 is configured to determine the reverse thrust rating based on the powerplant and/or aircraft parameter(s). One of the engine and propeller controllers 252, 254 may determine the reverse thrust rating and communicate the reverse thrust rating to the other one of the engine and propeller controllers 252, 254. The engine and propeller controllers 252, 254 may control reverse thrust of the propeller 120 based on the reverse thrust rating when reverse thrust is requested. The functionality of the engine and propeller controllers 252, 254 may be combined to form a single control system for the engine and propeller.

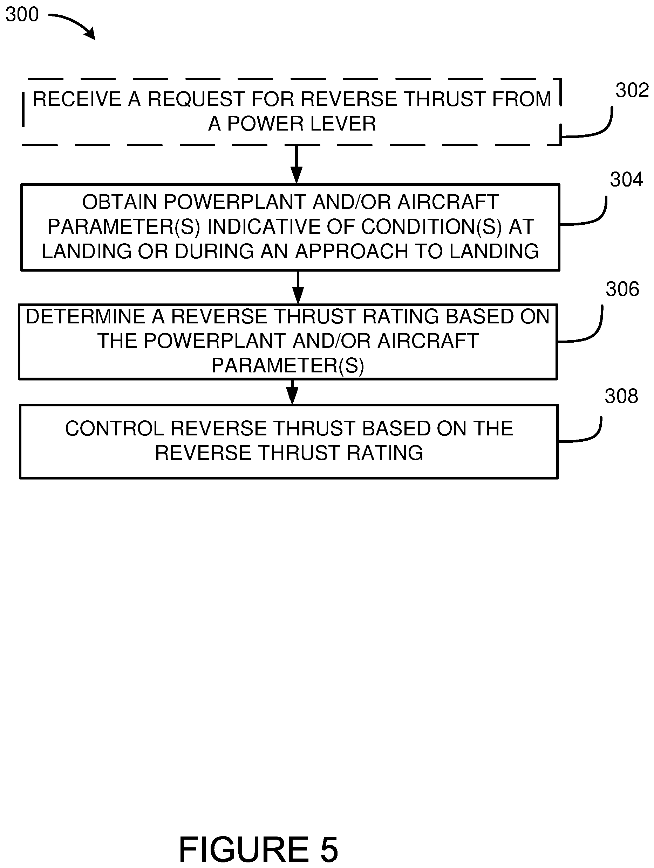

With reference to Figure 5, there is illustrated a flowchart of a method 300 for operating a powerplant, such as the powerplant 100. The method 300 may be performed by the control system 210, the engine controller 254, the propeller controller 252 or a combination thereof.

In some embodiments, the method 300 comprises at step 302 receiving a request for reverse thrust from a power lever 212 of the aircraft. Receiving the request for reverse thrust may comprise receiving a position of the power lever 212 from at least one sensor associated with the power lever 212. One of the engine and propeller controllers 252, 254 may provide the request for reverse thrust to the other one of the engine and propeller controllers 252, 254.

When the power lever 212 is between the ground idle and the maximum reverse thrust positions, this may indicate that reverse thrust is requested. When the power lever 212 is below a certain angle this may indicate that reverse thrust is requested.

At step 304, the method 300 comprises obtaining one or more powerplant and/or aircraft parameters indicative of one or more conditions at landing or during an approach to landing. The powerplant and/or aircraft parameter(s) may be obtained in real time, may be obtained regularly in accordance with any predetermined time interval, or may be obtained irregularly. The powerplant and/or aircraft parameter(s) may be monitored and may be obtained at any suitable time at landing or during an approach to landing. For example, the powerplant and/or aircraft parameter(s) may be obtained in response to a request for reverse thrust or when a weight-on-wheels condition of the aircraft has been met. The powerplant and/or aircraft parameter(s) obtained may be any suitable combination of the powerplant and/or aircraft parameters described in this document or otherwise known to those skilled in the art.

At step 306, the method 300 comprises determining a reverse thrust rating based on the one or more powerplant and/or aircraft parameters. In some embodiments, determining the reverse thrust rating at step 306 comprises selecting one of a plurality of reverse thrust ratings based on the powerplant and/or aircraft parameter(s). In some embodiments, determining the reverse thrust rating at step 306 comprises adjusting (e.g., reducing) a maximum reverse thrust rating based on the powerplant and/or aircraft parameter(s).The reverse thrust rating may be determined at any suitable time at landing or during the approach to landing. The reverse thrust rating may be determined in response to receiving the request for reverse thrust from the power lever 212 at step 302. The reverse thrust rating may be determined when a weight-on-wheels condition of the aircraft has been met. The reverse thrust rating may be determined in response to the powerplant and/or aircraft parameter(s) being obtained at step 304. The order of steps 302, 304, 306 may vary depending on practical implementations. For example, step 302 may occur after steps 304 and before step 306. In some embodiments, one or more of steps 302, 304, 306 may be performed concurrently.

At step 308, the method 300 comprises controlling reverse thrust of the powerplant 100 based on the reverse thrust rating when reverse thrust is requested. In embodiments where the powerplant 100 comprises an engine 110 coupled to a variable-pitch propeller 120 capable of generating forward and reverse thrust, controlling reverse thrust of the powerplant 100 comprises controlling reverse thrust of the propeller 120. Reverse thrust may be controlled and/or requested in different ways depending on practical implementation. The reverse thrust may be controlled and/or requested as described in U.S. Provisional U.S. Application Nos. 16/371,608 and 16/250,256. Reverse thrust is requested when the power lever 212 is set to a position for requesting reverse thrust, for example by the pilot. By way of another example, the control system 210 may physically move the power lever 212 via a servo motor to a position for requesting reverse thrust. In some embodiments, reverse thrust may be requested when any suitable mechanism (e.g., a push button) for requesting reverse thrust is actuated. In some embodiments, reverse thrust may be requested when a request to enable a mode for automated reverse thrust is received. In some embodiments, controlling reverse thrust comprises enabling and/or triggering reverse thrust when one or more conditions for reverse thrust are met (e.g., the power lever 212 is set to a position for requesting reverse thrust, a blade angle of the propeller 120 is below a blade angle threshold, the aircraft is on-ground and/or any other suitable condition(s)). The methods and systems described herein may be applicable to methods and/or systems that automatically apply reverse thrust without a pilot directly requesting reverse thrust at landing (e.g., with the power lever 212) and/or may be applicable to methods and/or systems for enabling and inhibiting reverse thrust based on one or more conditions.

In some embodiments, controlling reverse thrust comprises modifying, based on the determined reverse thrust rating, one or more of a propeller speed, a propeller blade angle and an engine torque. This is because when reverse thrust is controlled at the maximum reverse thrust rating, each of the propeller speed, propeller blade angle and/or engine torque may be set a given value. Accordingly, when reverse thrust is controlled at the determined reverse thrust rating, and which differs from the maximum reverse thrust rating, the given values may be modified based on the reverse thrust rating in order to control reverse thrust at a de-rated reverse thrust rating.

The systems and methods described herein may be applicable to both single and multiple (i.e., two or more) turboprop engines. In some embodiments, controlling reverse thrust comprises synchronizing the control of reverse thrust of a first propeller with control of reverse thrust of a second propeller. For example, a first control system associated with a first powerplant comprising the first propeller may communicate the determined reverse thrust rating to a second control system associated with a second powerplant comprising the second propeller such that both control systems may control reverse thrust based on the determined reverse thrust rating.

The first and second powerplants may each be implemented by the powerplant 100. The first and second control systems may each be implemented by the control system 210.

The systems and methods described herein may be applicable to operation of turbofan engines. Accordingly, the thrust of the turbofan engine may be controlled based on the reverse thrust rating when reverse thrust is requested. Reverse thrust of the turbofan engine may be requested in a similar manner as described elsewhere in this document. Controlling reverse thrust of the turbofan engine may comprise controlling engine fuel flow and/or variable geometries. The variable geometries may comprise one or more thrust reversers. When actuated, the thrust reversers redirect the engine's thrust so that it is directed forward, rather than backward. The reverse thrust provided by the thrust reversers may act against the forward travel of the aircraft in order to decelerate the aircraft at landing. Reverse thrust may be controlled based on the reverse thrust rating by adjusting the rate at which the doors of the thrust reversers are opened and/or the position that the doors of the thrust reversers are opened to.. The thrust reversers may comprise target or bucket type thrust reversers. The thrust reversers may comprise cascade type thrust reversers. The thrust reversers may vary depending on practical implementations. It should be appreciated that the functionality of controlling the propeller blade angle described herein may be omitted in embodiments with a turbofan engine, such as when the fan blades have a fixed angle. In some embodiments, the systems and methods described herein may be applicable to operation of turbofan engines with variable-pitch fan blades. In embodiments with variable-pitch fan blades, the pitch of the fan blades may be reversed in order to produce reverse thrust. Accordingly, reverse thrust may be controlled based on the reverse thrust rating by adjusting the pitch of the fan blades and/or the fan blades' rotational speed.

The term "bladed propulsor" may be used to refer to the propeller in embodiments where the aircraft powerplant comprises a propeller coupled to the engine and/or to the fan blades in embodiments where the aircraft powerplant comprises an engine having fan blades.

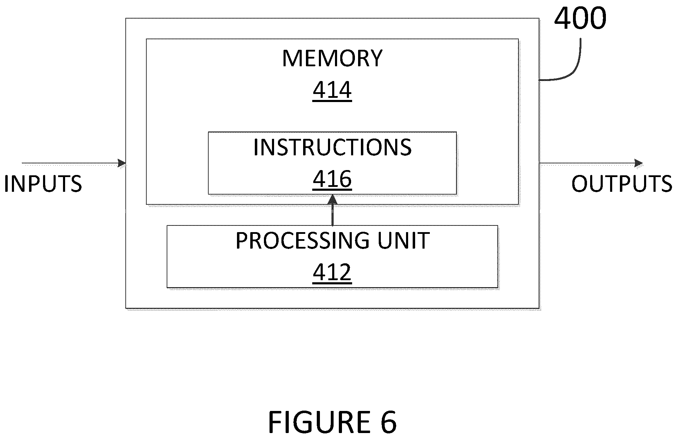

With reference to Figure 6, an example of a computing device 400 is illustrated. The control system 210 may be implemented with one or more computing devices 400. For example, each of the propeller controller 252 and the engine controller 254 may be implemented by a separate computing device 400. The computing device 400 comprises a processing unit 412 and a memory 414 which has stored therein computer-executable instructions 416. The processing unit 412 may comprise any suitable devices configured to implement the method 300 such that instructions 416, when executed by the computing device 400 or other programmable apparatus, may cause the functions/acts/steps performed as part of the method 300 as described herein to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412. Note that the computing device 400 can be implemented as part of a full-authority digital engine controls (FADEC) or other similar device, including electronic engine control (EEC), engine control unit (ECU), propeller electronic control (PEC), propeller control unit, engine and propeller electronic control system (EPECS) and the like.

The methods and systems for operating a powerplant described herein may be implemented in a high level procedural or object oriented programming or scripting language, or a combination thereof, to communicate with or assist in the operation of a computer system, for example the computing device 400. Alternatively, the methods and systems for operating a powerplant may be implemented in assembly or machine language. The language may be a compiled or interpreted language. Program code for implementing the methods and systems for operating a powerplant may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for operating a powerplant may also be considered to be implemented by way of a non-transitory computer-readable storage medium having a computer program stored thereon. The computer program may comprise computer-readable instructions which cause a computer, or more specifically the processing unit 412 of the computing device 400, to operate in a specific and predefined manner to perform the functions described herein, for example those described in the method 300.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the invention disclosed. Still other modifications which fall within the scope of the present invention as defined by the appended claims will be apparent to those skilled in the art, in light of a review of this disclosure.

Various aspects of the methods and systems for operating a powerplant may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention which is defined by the appended claims. The scope of the following claims should not be limited by the embodiments set forth in the examples, but should be given the broadest reasonable interpretation consistent with the description as a whole.

## Claims

1. A method (300) for operating a powerplant (100) of an aircraft, the method (300) comprising:
receiving a request from a power lever (212) of the aircraft to produce a reverse thrust with the aircraft powerplant (100), the request being received when the power lever (212) is set to a maximum reverse thrust position, the maximum reverse thrust position corresponding to a maximum reverse thrust rating of the aircraft powerplant (100) which corresponds to a predetermined upper limit for reverse thrust;
obtaining one or more powerplant or aircraft parameters indicative of one or more conditions at landing or during an approach to landing;
determining a reverse thrust rating based on the one or more powerplant or aircraft parameters, the reverse thrust rating corresponding to a percentage of the maximum reverse thrust rating; and
producing the reverse thrust with the aircraft powerplant (100) and controlling the reverse thrust of the aircraft powerplant (100) based on the reverse thrust rating when the reverse thrust is requested.

2. The method of claim 1, wherein determining the reverse thrust rating comprises selecting one of a plurality of reverse thrust ratings based on the one or more powerplant or aircraft parameters or adjusting a maximum reverse thrust rating based on the one or more powerplant or aircraft parameters.

3. The method of claims 1 or 2, wherein the one or more powerplant or aircraft parameters comprise one or more of an aircraft speed at landing, a runway length, an aircraft weight, a target aircraft speed at completion of reverse thrust, an aircraft wheel speed and a deceleration rate of the aircraft.

4. The method of any of claims 1 to 3, wherein the method comprises determining the reverse thrust rating in response to receiving the request to produce reverse thrust.

5. The method of any of claims 1 to 4, wherein the request to produce the reverse thrust is received when a request to enable a mode for automated reverse thrust is received.

6. The method of any of claims 1 to 5, wherein controlling the reverse thrust comprises modifying, based on the reverse thrust rating, one or more of a propeller speed, a propeller blade angle and an engine torque.

7. The method of any of claims 1 to 5, wherein the powerplant (100) comprises an engine (110) comprising or coupled to a variable-pitch bladed propulsor (120) capable of generating a forward thrust and the reverse thrust and wherein controlling reverse thrust comprises controlling the reverse thrust of the bladed propulsor (120).

8. A system (200) for operating a powerplant (100) of an aircraft, the system (200) comprising:
a power lever (212) of the aircraft for generating a request to produce a reverse thrust with the aircraft powerplant (100);
at least one processing unit (412); and
at least one non-transitory computer-readable memory (414) having stored thereon program instructions (416) executable by the processing unit (412) for:
receiving a request from the power lever (212) to produce a reverse thrust with the aircraft powerplant (100), the request being received when the power lever (212) is set to a maximum reverse thrust position, the maximum reverse thrust position corresponding to a maximum reverse thrust rating of the aircraft powerplant (100) which corresponds to a predetermined upper limit for reverse thrust;
obtaining one or more powerplant or aircraft parameters indicative of one or more conditions at landing or during an approach to landing;
determining a reverse thrust rating based on the one or more powerplant or aircraft parameters, the reverse thrust rating corresponding to a percentage of the maximum reverse thrust rating; and
controlling the reverse thrust of the aircraft powerplant (100) based on the reverse thrust rating when the reverse thrust is requested.

9. The system of claim 8, wherein determining the reverse thrust rating comprises selecting one of a plurality of reverse thrust ratings based on the one or more powerplant or aircraft parameters or adjusting a maximum reverse thrust rating based on the one or more powerplant or aircraft parameters.

10. The system of claim 8 or 9, wherein the one or more powerplant or aircraft parameters comprise one or more of an aircraft speed at landing, a runway length, an aircraft weight, a target aircraft speed at completion of the reverse thrust, an aircraft wheel speed and a deceleration rate of the aircraft.

11. The system of any of claims 8 to 10, wherein the program instructions (416) are further executable for determining the reverse thrust rating in response to receiving the request to produce the reverse thrust.

12. The system of any of claims 8 to 11, wherein the reverse thrust is requested when a request to enable a mode for automated reverse thrust is received.

13. The system of any of claims 8 to 12, wherein controlling the reverse thrust comprises modifying, based on the reverse thrust rating, one or more of a propeller speed, a propeller blade angle and an engine torque.

14. The system of any one of claims 8 to 12, wherein the aircraft powerplant (100) comprises an engine (110) comprising or coupled to a variable-pitch bladed propulsor (120) capable of generating a forward thrust and the reverse thrust and wherein controlling the reverse thrust comprises controlling reverse thrust of the bladed propulsor (120).

## Patentansprüche

1. Verfahren (300) zum Betrieb einer Triebwerksanlage (100) eines Flugzeugs, wobei das Verfahren (300) Folgendes umfasst:
Empfangen einer Anforderung von einem Schubhebel (212) des Flugzeugs, einen Umkehrschub mit der Flugzeugtriebwerksanlage (100) zu erzeugen, wobei die Anforderung empfangen wird, wenn der Schubhebel (212) auf eine maximale Umkehrschubposition eingestellt ist, wobei die maximale Umkehrschubposition einer maximalen Umkehrschubleistung der Flugzeugtriebwerksanlage (100) entspricht, die einer vorbestimmten Obergrenze für Umkehrschub entspricht;
Erlangen eines oder mehrerer Triebwerksanlagen- oder Flugzeugparameter, die einen oder mehrere Zustände bei der Landung oder während eines Landeanflugs angeben;
Bestimmen einer Umkehrschubleistung auf der Grundlage eines oder mehrerer Triebwerksanlagen- oder Flugzeugparameter, wobei die Umkehrschubleistung einem Prozentsatz der maximalen Umkehrschubleistung entspricht; und
Erzeugen des Umkehrschubs mit der Flugzeugtriebwerksanlage (100) und Steuern des Umkehrschubs der Flugzeugtriebwerksanlage (100) auf der Grundlage der Umkehrschubleistung, wenn der Umkehrschub angefordert wird.

2. Verfahren nach Anspruch 1, wobei das Bestimmen der Umkehrschubleistung Auswählen einer von einer Vielzahl von Umkehrschubleistungen auf der Grundlage des einen oder der mehreren Triebwerksanlagen- oder Flugzeugparameter oder Einstellen einer maximalen Umkehrschubleistung auf der Grundlage des einen oder der mehreren Triebwerksanlagen- oder Flugzeugparameter umfasst.

3. Verfahren nach Anspruch 1 oder 2, wobei der eine oder die mehreren Triebwerksanlagen- oder Flugzeugparameter eines oder mehrere von einer Flugzeuggeschwindigkeit bei der Landung, einer Landebahnlänge, einem Flugzeuggewicht, einer Zielgeschwindigkeit des Flugzeugs nach Beendigung von Umkehrschub, einer Flugzeugraddrehzahl und einer Verzögerungsrate des Flugzeugs umfassen.

4. Verfahren nach einem der Ansprüche 1 bis 3, wobei das Verfahren Bestimmen der Umkehrschubleistung als Reaktion auf das Empfangen der Anforderung, Umkehrschub zu erzeugen, umfasst.

5. Verfahren nach einem der Ansprüche 1 bis 4, wobei die Anforderung, den Umkehrschub zu erzeugen, empfangen wird, wenn eine Anforderung, einen Modus für automatisierten Umkehrschub zu aktivieren, empfangen wird.

6. Verfahren nach einem der Ansprüche 1 bis 5, wobei das Steuern des Umkehrschubs Modifizieren eines oder mehrerer von einer Propellerdrehzahl, einem Propellerblattwinkel und einem Motordrehmoment auf der Grundlage der Umkehrschubleistung umfasst.

7. Verfahren nach einem der Ansprüche 1 bis 5, wobei die Triebwerksanlage (100) einen Motor (110) umfasst, der eine Antriebsvorrichtung mit verstellbaren Blättern (120) umfasst oder mit dieser gekoppelt ist, die in der Lage ist, einen Vorwärtsschub und einen Umkehrschub zu generieren, und wobei das Steuern des Umkehrschubs Steuern des Umkehrschubs der Antriebsvorrichtung mit verstellbaren Blättern (120) umfasst.

8. System (200) zum Betrieb einer Triebwerksanlage (100) eines Flugzeugs, wobei das System (200) Folgendes umfasst:
einen Schubhebel (212) des Flugzeugs zum Generieren einer Anforderung, einen Umkehrschub mit der Flugzeugtriebwerksanlage (100) zu erzeugen;
mindestens eine Verarbeitungseinheit (412); und
mindestens einen nichtflüchtigen computerlesbaren Speicher (414), auf dem Programmanweisungen (416) gespeichert sind, die durch die Verarbeitungseinheit (412) zu Folgendem ausführbar sind:
Empfangen einer Anforderung vom Schubhebel (212), einen Umkehrschub mit der Flugzeugtriebwerksanlage (100) zu erzeugen, wobei die Anforderung empfangen wird, wenn der Schubhebel (212) auf eine maximale Umkehrschubposition eingestellt ist, wobei die maximale Umkehrschubposition einer maximalen Umkehrschubleistung der Flugzeugtriebwerksanlage (100) entspricht, die einer vorbestimmten Obergrenze für Umkehrschub entspricht;
Erlangen eines oder mehrerer Triebwerksanlagen- oder Flugzeugparameter, die einen oder mehrere Zustände bei der Landung oder während eines Landeanflugs angeben;
Bestimmen einer Umkehrschubleistung auf der Grundlage eines oder mehrerer Triebwerksanlagen- oder Flugzeugparameter, wobei die Umkehrschubleistung einem Prozentsatz der maximalen Umkehrschubleistung entspricht; und
Steuern des Umkehrschubs der Flugzeugtriebwerksanlage (100) auf der Grundlage der Umkehrschubleistung, wenn der Umkehrschub angefordert wird.

9. System nach Anspruch 8, wobei das Bestimmen der Umkehrschubleistung Auswählen einer von einer Vielzahl von Umkehrschubleistungen auf der Grundlage des einen oder der mehreren Triebwerksanlagen- oder Flugzeugparameter oder Einstellen einer maximalen Umkehrschubleistung auf der Grundlage des einen oder der mehreren Triebwerksanlagen- oder Flugzeugparameter umfasst.

10. System nach Anspruch 8 oder 9, wobei der eine oder die mehreren Triebwerksanlagen- oder Flugzeugparameter eines oder mehrere von einer Flugzeuggeschwindigkeit bei der Landung, einer Landebahnlänge, einem Flugzeuggewicht, einer Zielgeschwindigkeit des Flugzeugs nach Beendigung des Umkehrschubs, einer Flugzeugraddrehzahl und einer Verzögerungsrate des Flugzeugs umfassen.

11. System nach einem der Ansprüche 8 bis 10, wobei die Programmanweisungen (416) ferner zum Bestimmen der Umkehrschubleistung als Reaktion auf das Empfangen der Anforderung, den Umkehrschub zu erzeugen, ausführbar sind.

12. System nach einem der Ansprüche 8 bis 11, wobei der Umkehrschub angefordert wird, wenn eine Anforderung, einen Modus für automatisierten Umkehrschub zu aktivieren, empfangen wird.

13. System nach einem der Ansprüche 8 bis 12, wobei das Steuern des Umkehrschubs Modifizieren eines oder mehrerer von einer Propellerdrehzahl, einem Propellerblattwinkel und einem Motordrehmoment auf der Grundlage der Umkehrschubleistung umfasst.

14. System nach einem der Ansprüche 8 bis 12, wobei die Flugzeugtriebwerksanlage (100) einen Motor (110) umfasst, der eine Antriebsvorrichtung mit verstellbaren Blättern (120) umfasst oder mit dieser gekoppelt ist, die in der Lage ist, einen Vorwärtsschub und den Umkehrschub zu generieren, und wobei das Steuern des Umkehrschubs Steuern von Umkehrschub der Antriebsvorrichtung mit verstellbaren Blättern (120) umfasst.

## Revendications

1. Procédé (300) de fonctionnement d'un groupe motopropulseur (100) d'un aéronef, le procédé (300) comprenant :
la réception d'une demande à partir d'une manette de poussée (212) de l'aéronef pour produire une poussée inverse avec le groupe motopropulseur (100) d'aéronef, la demande étant reçue lorsque la manette de poussée (212) est réglée sur une position de poussée inverse maximale, la position de poussée inverse maximale correspondant à une valeur nominale de poussée inverse maximale du groupe motopropulseur (100) d'aéronef qui correspond à une limite supérieure prédéterminée pour une poussée inverse ;
l'obtention d'un ou plusieurs paramètres de groupe motopropulseur ou d'aéronef indicatifs d'une ou plusieurs conditions à l'atterrissage ou pendant une approche à l'atterrissage ;
la détermination d'une valeur nominale de poussée inverse sur la base du ou des paramètres de groupe motopropulseur ou d'aéronef, la valeur nominale de poussée inverse correspondant à un pourcentage de la valeur nominale de poussée inverse maximale ; et
la production de la poussée inverse avec le groupe motopropulseur (100) d'aéronef et la commande de la poussée inverse du groupe motopropulseur (100) d'aéronef sur la base de la valeur nominale de poussée inverse lorsque la poussée inverse est demandée.

2. Procédé selon la revendication 1, dans lequel la détermination de la valeur nominale de poussée inverse comprend la sélection de l'une d'une pluralité de valeurs nominales de poussée inverse sur la base du ou des paramètres de groupe motopropulseur ou d'aéronef ou l'ajustement d'une valeur nominale de poussée inverse maximale sur la base du ou des paramètres de groupe motopropulseur ou d'aéronef.

3. Procédé selon les revendications 1 ou 2, dans lequel le ou les paramètres de groupe motopropulseur ou d'aéronef comprennent l'un ou plusieurs parmi une vitesse d'aéronef à l'atterrissage, une longueur de piste, un poids d'aéronef, une vitesse cible d'aéronef à la fin d'une poussée inverse, une vitesse de roue d'aéronef et un taux de décélération de l'aéronef.

4. Procédé selon l'une quelconque des revendications 1 à 3, dans lequel le procédé comprend la détermination de la valeur nominale de poussée inverse en réponse à la réception de la demande de production d'une poussée inverse.

5. Procédé selon l'une quelconque des revendications 1 à 4, dans lequel la demande de production de la poussée inverse est reçue lorsqu'une demande d'activation d'un mode pour une poussée inverse automatisée est reçue.

6. Procédé selon l'une quelconque des revendications 1 à 5, dans lequel la commande de la poussée inverse comprend la modification, sur la base de la valeur nominale de poussée inverse, de l'un ou plusieurs parmi une vitesse d'hélice, un angle de pale d'hélice et un couple moteur.

7. Procédé selon l'une quelconque des revendications 1 à 5, dans lequel le groupe motopropulseur (100) comprend un moteur (110) comprenant ou couplé à une hélice à pales (120) à pas variable capable de générer une poussée vers l'avant et la poussée inverse et dans lequel la commande de la poussée inverse comprend la commande de la poussée inverse de l'hélice à pales (120).

8. Système (200) de fonctionnement d'un groupe motopropulseur (100) d'un aéronef, le système (200) comprenant :
une manette de poussée (212) de l'aéronef destinée à générer une demande de production d'une poussée inverse avec le groupe motopropulseur (100) d'aéronef ;
au moins une unité de traitement (412) ; et
au moins une mémoire lisible par ordinateur non transitoire (414) sur laquelle sont stockées des instructions de programme (416) pouvant être exécutées par l'unité de traitement (412) pour :
recevoir une demande à partir de la manette de poussée (212) pour produire une poussée inverse avec le groupe motopropulseur (100) d'aéronef, la demande étant reçue lorsque la manette de poussée (212) est réglée sur une position de poussée inverse maximale, la position de poussée inverse maximale correspondant à une valeur nominale de poussée inverse maximale du groupe motopropulseur (100) d'aéronef qui correspond à une limite supérieure prédéterminée pour une poussée inverse ;
obtenir un ou plusieurs paramètres de groupe motopropulseur ou d'aéronef indicatifs d'une ou plusieurs conditions à l'atterrissage ou pendant une approche à l'atterrissage ;
déterminer une valeur nominale de poussée inverse sur la base du ou des paramètres de groupe motopropulseur ou d'aéronef, la valeur nominale de poussée inverse correspondant à un pourcentage de la valeur nominale de poussée inverse maximale ; et
commander la poussée inverse du groupe motopropulseur (100) d'aéronef sur la base de la valeur nominale de poussée inverse lorsque la poussée inverse est demandée.

9. Système selon la revendication 8, dans lequel la détermination de la valeur nominale de poussée inverse comprend la sélection de l'une d'une pluralité de valeurs nominales de poussée inverse sur la base du ou des paramètres de groupe motopropulseur ou d'aéronef ou l'ajustement d'une valeur nominale de poussée inverse maximale sur la base du ou des paramètres de groupe motopropulseur ou d'aéronef.

10. Système selon la revendication 8 ou 9, dans lequel le ou les paramètres de groupe motopropulseur ou d'aéronef comprennent l'un ou plusieurs parmi une vitesse d'aéronef à l'atterrissage, une longueur de piste, un poids d'aéronef, une vitesse cible d'aéronef à la fin de la poussée inverse, une vitesse de roue d'aéronef et un taux de décélération de l'aéronef.

11. Système selon l'une quelconque des revendications 8 à 10, dans lequel les instructions de programme (416) peuvent en outre être exécutées pour déterminer la valeur nominale de poussée inverse en réponse à la réception de la demande de production de la poussée inverse.

12. Système selon l'une quelconque des revendications 8 à 11, dans lequel la poussée inverse est demandée lorsqu'une demande d'activation d'un mode pour une poussée inverse automatisée est reçue.

13. Système selon l'une quelconque des revendications 8 à 12, dans lequel la commande de la poussée inverse comprend la modification, sur la base de la valeur nominale de poussée inverse, de l'un ou plusieurs parmi une vitesse d'hélice, un angle de pale d'hélice et un couple moteur.

14. Système selon l'une quelconque des revendications 8 à 12, dans lequel le groupe motopropulseur (100) d'aéronef comprend un moteur (110) comprenant ou couplé à une hélice à pales (120) à pas variable capable de générer une poussée vers l'avant et la poussée inverse et dans lequel la commande de la poussée inverse comprend la commande d'une poussée inverse de l'hélice à pales (120).
